# EUROPEAN PATENT APPLICATION

(11) **EP 2 378 318 A2**
(43) Date of publication of application: **19.10.2011**
(21) Application number: 11159628.4
(22) Date of filing: 24.03.2011
(51) Int. Cl.: G01W 1/00

(54) **Dynamically monitoring airborne turbulence**

(30) Priority: 16.04.2010 US 761774
(71) Applicant: The Boeing Company, Chicago, IL 60606-2016 (US)
(72) Inventor: Ganz, Matthew W., Marina Del Rey, CA 98292 (US); Spinelli, Charles B., Bainbridge Island, WA 98110 (US)
(74) Representative: Howson, Richard G.B.

(57) **Abstract**

A method for monitoring for turbulence. Data is received from a motion sensor system in a portable data processing system in an aircraft while the aircraft is in operation. The portable data processing system is configured to be moved by a single person. A number of pieces of data is identified in the data received from the motion sensor system in which the number of pieces of data indicates a presence of turbulence encountered. Turbulence information is generated using the number of pieces of data. The turbulence information identified is sent to a remote data processing system outside of the aircraft.

## Description

### 1. Field:

The present disclosure relates generally to aircraft and, in particular, to detecting turbulence while an aircraft is in flight. Still more particularly, the present disclosure relates to a method and apparatus to dynamically monitor for turbulence while an aircraft is in flight.

### 2. Background:

Turbulence in the air occurs when an erratic movement of air masses is present. Oftentimes, the turbulence is referred to as clear air turbulence, because the movement of air occurs in the absence of any visual indications, such as clouds.

Turbulence may occur at different altitudes. For example, turbulence may occur at an altitude of about 23,000 feet to about 39,000 feet around jet streams. Additionally, turbulence may be encountered at other altitudes. For example, turbulence may be encountered at lower altitudes, such as near mountain ranges.

Turbulence is often difficult to detect visually and with currently used radar systems. In some cases, sensors, such as Doppler, light detection and ranging systems, and scintillometers may be used. These types of systems measure turbulence using optical techniques. Additionally, turbulence may be reported by pilots in aircraft reporting that they have encountered turbulence at certain locations and altitudes.

The identification of turbulence is used by pilots and air traffic controllers to reduce undesired conditions during flight. Turbulence may move or shake an aircraft such that passengers and crew find it difficult to walk, baggage may fly out of opened overhead bins, drinks and other items may tip over, and/or other undesirable conditions may occur.

Thus, it would be advantageous to have a method and apparatus which takes into account one or more of the issues discussed above, as well as possibly other issues.

### SUMMARY

In one advantageous embodiment, an apparatus comprises a portable data processing system and program code. The portable data processing system comprises a portable housing configured to be moved by a single person, and a processor unit associated with the portable housing. The portable data processing system comprises a motion sensor system associated with the portable housing. The motion sensor system is configured to generate data about movement detected for the portable data processing system. The portable data processing system also comprises a wireless communications unit associated with the portable data processing system and a storage device. The program code is stored on the storage device. The processor unit is configured to run the program code to receive the data from the motion sensor system. The processor unit is configured to run the program code to identify a number of pieces of data in the data received from the motion sensor system in which the number of pieces of data indicates a presence of turbulence encountered by an aircraft in which the portable data processing system is located. The processor unit is also configured to run the program code to generate turbulence information using the number of pieces of data and send the turbulence information identified to a remote data processing system outside of the aircraft.

In another advantageous embodiment, a method is present for monitoring for turbulence. Data is received from a motion sensor system in a portable data processing system in an aircraft while the aircraft is in operation. The portable data processing system is configured to be moved by a single person. A number of pieces of data is identified in the data received from the motion sensor system in which the number of pieces of data indicates a presence of turbulence encountered. Turbulence information is generated using the number of pieces of data. The turbulence information identified is sent to a remote data processing system outside of the aircraft.

In yet another advantageous embodiment, a computer program product for monitoring turbulence comprises a computer recordable storage medium and program code. The program code is stored on the computer recordable storage medium. Program code is present for receiving data from a motion sensor system in a portable data processing system in an aircraft while the aircraft is in operation. The portable data processing system is configured to be moved by a single person. Program code is present for identifying a number of pieces of data in the data received from the motion sensor system in which the number of pieces of data indicates a presence of turbulence encountered. Program code is present for generating turbulence information using the number of pieces of data and for sending the turbulence information identified to a remote data processing system outside of the aircraft.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
**Figure 1** is an illustration of a turbulence monitoring environment in accordance with an advantageous embodiment;
**Figure 2** is an illustration of a turbulence monitoring environment in accordance with an advantageous embodiment;
**Figure 3** is an illustration of a data processing system in accordance with an advantageous embodiment;
**Figure 4** is an illustration of turbulence information in accordance with an advantageous embodiment;
**Figure 5** is an illustration of processed turbulence information in accordance with an advantageous embodiment;
**Figure 6** is an illustration of turbulence information in accordance with an advantageous embodiment;
**Figure 7** is an illustration of turbulence information in accordance with an advantageous embodiment;
**Figure 8** is an illustration of turbulence information in accordance with an advantageous embodiment;
**Figure 9** is an illustration of turbulence information displayed on a data processing system in accordance with an advantageous embodiment;
**Figure 10** is an illustration of a flowchart of a process for monitoring for air turbulence;
**Figure 11** is an illustration of a flowchart of a process for processing turbulence information in accordance with an advantageous embodiment;
**Figure 12** is an illustration of a flowchart of a process for processing turbulence information in accordance with an advantageous embodiment; and
**Figure 13** is an illustration of a flowchart of a process for generating a turbulence alert in accordance with an advantageous embodiment.

### DETAILED DESCRIPTION

The advantageous embodiments recognize and take into account a number of different considerations. For example, the different advantageous embodiments recognize and take into account that the identification of turbulence can be made in a number of different ways. For example, turbulence can be made through reports made by pilots in aircraft encountering turbulence. Additionally, weather forecasts also are used to predict when turbulence may occur. Accelerometers may be associated or integrated into the structure of the aircraft to identify turbulence.

The different advantageous embodiments recognize and take into account that the reporting of turbulence by pilots may not provide information on turbulence as frequently as desired. This type of reporting requires a pilot to verbally report the encountering of turbulence by the aircraft each time the aircraft encounters turbulence. Further, this type of reporting may not provide the desired amount of accuracy in determining the level of severity of turbulence that has been encountered.

The different advantageous embodiments recognize and take into account that the reports made by pilots only relate to a specific region and time of occurrence. Typically, the location and the magnitude of the turbulence may be less precise than desired.

The different advantageous embodiments recognize and take into account that weather forecasts may provide a probability that turbulence occurs. Weather forecasts are often not as accurate as desired with respect to time, magnitude, and location of turbulence. Further, these types of forecasts may result in false negative or false positive warnings.

As a result, the different advantageous embodiments recognize and take into account that turbulence may be encountered when turbulence is not expected if a pilot relies on the weather forecasts. Additionally, passengers may be inconvenienced by false positive warnings. Passengers may be restricted to their seats when such restriction is unnecessary.

The different advantageous embodiments also recognize and take into account that using accelerometers in the structure of the aircraft provides continuous monitoring and a more precise way to identify the severity of turbulence. The different advantageous embodiments recognize and take into account that the use of accelerometers to generate information used by the network of the aircraft requires testing and certification. As a result, installing accelerometers in aircraft has installation costs, testing costs, delay costs, and/or certification costs. Thus, this type of installation may be more costly and/or time consuming than desired.

Thus, the different advantageous embodiments provide a method and apparatus for monitoring for air turbulence. A number of advantageous embodiments comprise an apparatus that has a portable data processing system and program code used by the portable data processing system.

The portable data processing system comprises a portable housing, a processor unit, a motion sensor system, a wireless communications unit, and a storage device. The processor unit, the motion sensor system, the wireless communications unit, and the storage device are all associated with the portable housing.

A first component may be considered to be associated with a second component by being secured to the second component, bonded to the second component, fastened to the second component, and/or connected to the second component in some other suitable manner. The first component also may be connected to the second component by using a third component. The first component may also be considered to be associated with the second component by being formed as part of and/or an extension of the second component.

The processor unit is configured to run the program code to receive data from the motion sensor system and identify a number of pieces of data in the data received from the motion sensor system. The number of pieces of data indicates a presence of turbulence encountered by an aircraft in which the portable data processing system is located. Further, the processor unit is configured to run the program code to generate turbulence information using the number of pieces of data and send the turbulence information identified to a remote data processing system outside of the aircraft.

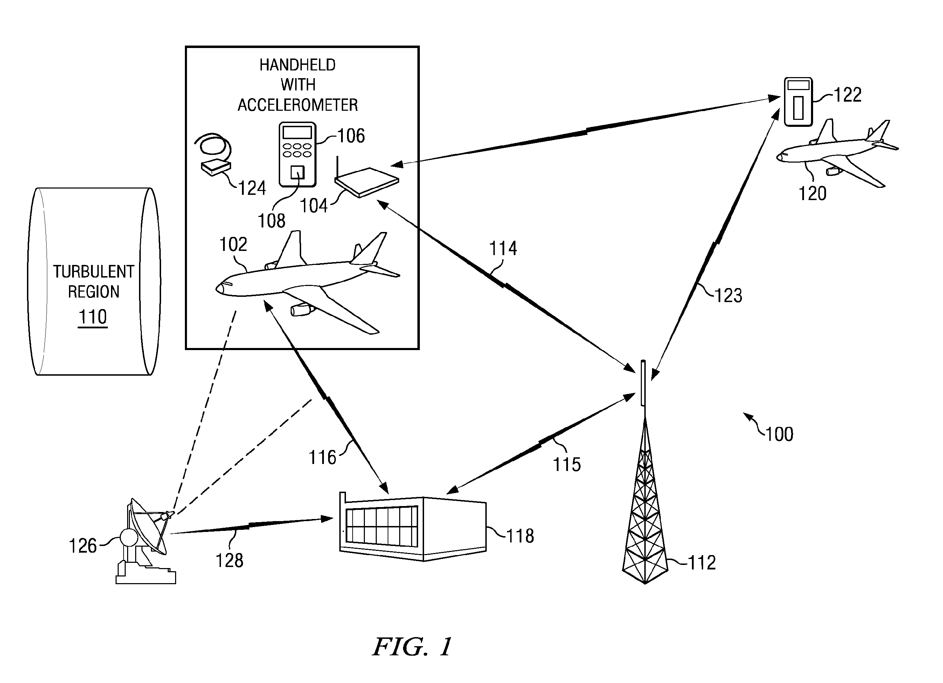

With reference now to **Figure 1**, an illustration of a turbulence monitoring environment is depicted in accordance with an advantageous embodiment. In this example, turbulence monitoring environment **100** includes aircraft **102**. Aircraft **102** has wireless network **104** inside of aircraft **102**. Additionally, handheld data processing system **106** is present inside of aircraft **102**.

As depicted, handheld data processing system **106** includes accelerometer **108**. Accelerometer **108** is configured to detect movement of handheld data processing system **106**. Handheld data processing system **106**, in these examples, is placed on or secured to the interior of aircraft **102**. Although handheld data processing system **106** may be held by a person, detection of turbulence in turbulent region **110** may be more accurately detected and measured if handheld data processing system **106** is connected to or somehow secured to the interior of aircraft **102**.

For example, handheld data processing system **106** may be placed on a table, a cart, in a drawer, or some other location inside of aircraft **102**. As another example, handheld data processing system **106** may be secured to a monument or other structure in the interior of the aircraft using a strap, a hook-and-loop fastener, and/or other suitable types of fastening systems.

In these illustrative examples, accelerometer **108** generates data in response to detecting motion of handheld data processing system **106**. In these illustrative examples, handheld data processing system **106** identifies information from the data. This information may be, for example, turbulence information about turbulent region **110**. Handheld data processing system **106** transmits the information to wireless network **104**.

This data may then be sent to a number of different locations. For example, the data may be sent to transmitter and receiver **112** over wireless communications link **114**. In turn, transmitter and receiver **112** may send the information to ground station **118** or aircraft **120** over wireless communications link **115**. In some illustrative embodiments, ground station **118** may directly receive the information from wireless network **104** through wireless communications link **116**.

Ground station **118** processes the information from handheld data processing system **106** to generate processed information. In some illustrative examples, ground station **118** may use information from other sources to process the information from handheld data processing system **106**. These other sources may include, for example, without limitation, databases at ground station **118**, databases that may be accessed by ground station **118**, and/or other suitable sources of information.

In another illustrative example, ground station **118** may retrieve information from a database using a wireless communications link. This information may include a type for aircraft **102** and a weight of aircraft **102**. This information may be used with the information received from handheld data processing system **106** to calculate an eddy dissipation rate (EDR). The eddy dissipation rate may be used to classify the turbulence in turbulent region **110**. The classification for the turbulence is part of the processed information generated at ground station **118**.

This processed information may then be distributed for use. For example, ground station **118** may send the processed information to handheld data processing system **122** in aircraft **120** using wireless communications link **123**.

Ground station **118** may identify aircraft **120** as an aircraft to receive information based on the location of aircraft **102** and the location and heading of aircraft **120**. If aircraft **120** is headed towards turbulent region **110**, ground station **118** sends the information to aircraft **120**.

The location of aircraft **102** may be identified in a number of different ways. The location of aircraft **102** may be identified using, for example, global positioning system unit **124**. Global positioning system unit **124** may be associated with handheld data processing system **106** in aircraft **102**.

For example, global positioning system unit **124** may be part of handheld data processing system **106**. An antenna may be attached to a window or other location where satellite signals may be received by global positioning system unit **124**. In other illustrative examples, global positioning system unit **124** may be a separate device in communication with handheld data processing system **106**.

In yet another illustrative example, radar system **126** may identify the location of aircraft **102**. This location may then be sent to ground station **118** over communications link **128**.

In these examples, information sent to aircraft **120** may take various forms. The information may include information received from handheld data processing system **106** and/or other information. For example, ground station **118** may create a report or map that is sent to handheld data processing system **122** in aircraft **120**. The information may include a warning and an amount of time in which aircraft **120** is predicted to encounter turbulent region **110**. In other illustrative examples, the information sent to handheld data processing system **122** may include a map of turbulence in an area around aircraft **120**.

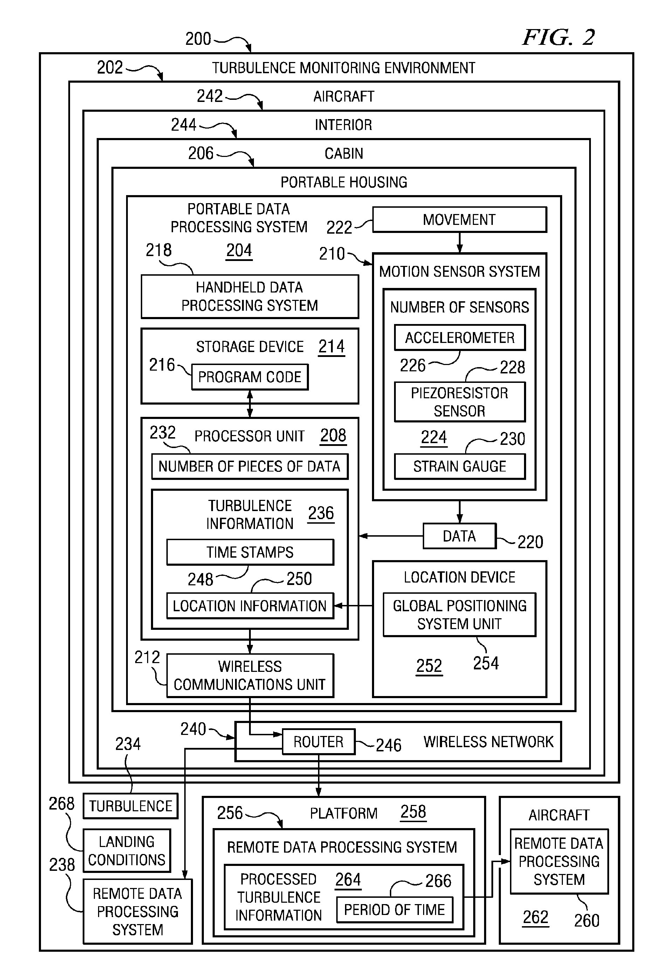

With reference now to **Figure 2**, an illustration of a turbulence monitoring environment is depicted in accordance with an advantageous embodiment. Turbulence monitoring environment **100** in **Figure 1** is an example of one implementation for turbulence monitoring environment **200** in **Figure 2**.

In this illustrative example, turbulence monitoring environment **200** includes aircraft **202** and portable data processing system **204.** In these illustrative examples, portable data processing system **204** is configured for use inside of aircraft **202**.

Portable data processing system **204** comprises portable housing **206**, processor unit **208**, motion sensor system **210**, wireless communications unit **212**, and storage device **214**. Portable data processing system **204** is in portable housing **206**. Processor unit **208**, motion sensor system **210**, wireless communications unit **212**, and storage device **214** are associated with portable housing **206** in these examples. Of course, portable data processing system **204** may include other components in addition to or in place of the ones illustrated herein.

Portable housing **206** is configured to be moved by a single person. In other words, portable data processing system **204** in portable housing **206** may be moved by one person without needing help from another person. In addition, the person does not need to use equipment to move portable data processing system **204**. For example, a single person may pick up portable housing **206** with their hands and move portable housing **206**.

In some illustrative examples, portable data processing system **204** takes the form of handheld data processing system **218**. Handheld data processing system **218** has portable housing **206** that is designed to, for example, allow a person to hold handheld data processing system **218** in a single hand.

In these examples, motion sensor system **210** includes number of sensors **224**. Number of sensors **224** may include, for example, at least one of accelerometer **226**, piezoresistor sensor **228**, strain gauge **230**, and/or other suitable types of sensors.

As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C, or item B and item C. In other examples, "at least one of" may be, for example, without limitation, two of item A, one of item B, and 10 of item C; four of item B and seven of item C; and other suitable combinations.

In these illustrative examples, number of sensors **224** in motion sensor system **210** is configured to generate data **220** about movement **222** detected for portable data processing system **204**.

In the illustrative examples, program code **216** is located in storage device **214**. Processor unit **208** runs program code **216** to receive data **220** from motion sensor system **210**. Further, processor unit **208** runs program code **216** to identify number of pieces of data **232** in data **220** received from motion sensor system **210**. Number of pieces of data **232** indicates a presence of turbulence **234** encountered by aircraft **202**. Further, processor unit **208** runs program code **216** to generate turbulence information **236** using number of pieces of data **232**. Processor unit **208** sends turbulence information **236** to remote data processing system **238** outside of aircraft **202**.

In these illustrative examples, turbulence information **236** is transmitted to wireless network **240** using wireless communications unit **212** in portable data processing system **204**. For example, turbulence information **236** may be sent to remote data processing system **238** over the Internet using wireless network **240**.

Wireless network **240** is a wireless network located in interior **242** of aircraft **202**. For example, wireless network **240** may be present in cabin **244** of aircraft **202**.

Wireless network **240** may include, for example, router **246**. Router **246** is configured to receive turbulence information **236** from portable data processing system **204**. Router **246** is configured to send turbulence information **236** to remote data processing system **238**.

Wireless network **240** may be implemented using currently available wireless networks in aircraft. The service in these wireless networks may be provided through a number of different providers. For example, Aircell provides wireless networks and Internet access to passengers in aircraft. This type of wireless network may be used to implement wireless network **240** in these examples.

In these illustrative examples, portable data processing system **204** is placed on or secured to interior **242** of aircraft **202**. This type of placement of portable data processing system **204** is used instead of having a person carry portable data processing system **204** during operation of portable data processing system **204** to detect movement **222**.

In the different illustrative examples, turbulence information **236** may take a number of different forms. For example, without limitation, turbulence information **236** may comprise number of pieces of data **232**. In other examples, turbulence information **236** also may include time stamps **248** and/or location information **250**. Time stamps **248** identify the time when number of pieces of data **232** was generated by motion sensor system **210**. Location information **250** identifies a location of aircraft **202** when number of pieces of data **232** was generated by motion sensor system **210**.

Location information **250** may include a location of aircraft **202** in three-dimensional space. For example, longitude and latitude may be present in location information **250**. Altitude may also be present in location information **250**. Altitude provides a height of aircraft **202**.

Location information **250** may be generated using location device **252**. Location device **252** is associated with portable data processing system **204**. Location device **252** may be connected to or integrated as part of portable data processing system **204**.

In these examples, location device **252** may be global positioning system unit **254**. When location device **252** takes the form of global positioning system unit **254**, an antenna may be attached to a window or other location to allow global positioning system unit **254** to receive satellite signals. In other illustrative examples, location information **250** may be received from other computer systems or networks on aircraft **202**, depending upon the particular implementation.

Turbulence information **236** may be sent to remote data processing system **256** at platform **258**. Platform **258** may be a ground platform, such as an air traffic control station, or some other location. In other illustrative examples, turbulence information **236** may be sent to another location, such as remote data processing system **260** in aircraft **262**. In these illustrative examples, remote data processing system **256** may process turbulence information **236** to form processed turbulence information **264**. Remote data processing system **256** then sends processed turbulence information **264** to remote data processing system **260** in aircraft **262**.

In these illustrative examples, processed turbulence information **264** may take a number of different forms. For example, without limitation, processed turbulence information **264** may be a map containing an identification of turbulent regions or other information. In addition, processed turbulence information **264** may be merely an indication that turbulence **234** may be encountered by aircraft **262** within period of time **266**.

The illustration of turbulence monitoring environment **200** in **Figure 2** is not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, in some illustrative examples, portable data processing system **204** may be used to detect other events other than turbulence **234**. For example, without limitation, portable data processing system **204** may use data **220** to detect landing conditions **268**. Data **220** may be generated when motion sensor system 210 detects movement of aircraft **202** as aircraft **202** lands on a runway. This information may be used to determine whether maintenance may be needed for the landing gear or other systems within aircraft **202**. Further, landing conditions **268** also may be used to identify whether changes in landing procedures are needed for other aircraft landing on the same runway.

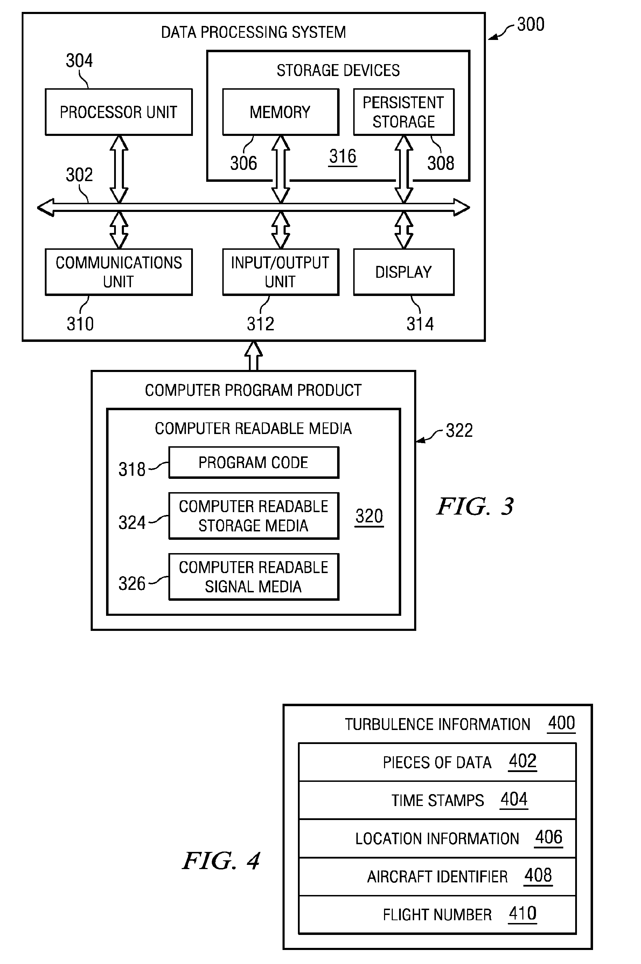

Turning now to **Figure 3**, an illustration of a data processing system is depicted in accordance with an advantageous embodiment. Data processing system **300** may be used to implement different components in **Figures 1** and **2**. For example, data processing system **300** may be used to implement handheld data processing system **106**, a computer at ground station **118**, and/or handheld data processing system **122** in **Figure 1**. As another example, data processing system 300 may be used to implement portable data processing system **204**, remote data processing system **238**, remote data processing system **256**, and/or remote data processing system **260** in **Figure 2**.

In this illustrative example, data processing system **300** includes communications fabric **302**, which provides communications between processor unit **304**, memory **306**, persistent storage **308**, communications unit **310**, input/output (I/O) unit **312**, and display **314**.

Processor unit **304** processes instructions for software that may be loaded into memory **306**. Processor unit **304** may be a set of one or more processors or may be a multi-processor core, depending on the particular implementation. Further, processor unit **304** may be implemented using one or more heterogeneous processor systems, in which a main processor is present with secondary processors on a single chip. As another illustrative example, processor unit **304** may be a symmetric multi-processor system containing multiple processors of the same type.

Memory **306** and persistent storage **308** are examples of storage devices **316**. A storage device is any piece of hardware that is capable of storing information, such as, for example, without limitation, data, program code in functional form, and/or other suitable information either on a temporary basis and/or a permanent basis. Memory **306**, in these examples, may be, for example, a random access memory or any other suitable volatile or non-volatile storage device.

Persistent storage **308** may take various forms, depending on the particular implementation. For example, persistent storage **308** may contain one or more components or devices. For example, persistent storage **308** may be a hard drive, a flash memory, a rewritable optical disk, a rewritable magnetic tape, or some combination of the above. The media used by persistent storage **308** may be removable. For example, a removable hard drive may be used for persistent storage **308**.

Communications unit **310**, in these examples, provides for communication with other data processing systems or devices. In these examples, communications unit **310** is a network interface card. Communications unit **310** may provide communications through the use of either or both physical and wireless communications links.

Input/output unit **312** allows for the input and output of data with other devices that may be connected to data processing system **300**. For example, input/output unit **312** may provide a connection for user input through a keyboard, a mouse, and/or some other suitable input device. Further, input/output unit **312** may send output to a printer. Display **314** provides a mechanism to display information to a user.

Instructions for the operating system, applications, and/or programs may be located in storage devices **316**, which are in communication with processor unit **304** through communications fabric **302**. In these illustrative examples, the instructions are in a functional form on persistent storage **308**. These instructions may be loaded into memory **306** for execution by processor unit **304**. The processes of the different embodiments may be performed by processor unit **304** using computer implemented instructions, which may be located in a memory, such as memory **306**.

These instructions are referred to as program code, computer usable program code, or computer readable program code that may be read and executed by a processor in processor unit **304**. The program code, in the different embodiments, may be embodied on different physical or computer readable storage media, such as memory **306** or persistent storage **308**.

Program code **318** is located in a functional form on computer readable media **320** that is selectively removable and may be loaded onto or transferred to data processing system **300** for execution by processor unit **304**. Program code **318** and computer readable media **320** form computer program product **322**. In one example, computer readable media **320** may be computer readable storage media **324** or computer readable signal media **326**.

Computer readable storage media **324** may include, for example, an optical or magnetic disk that is inserted or placed into a drive or other device that is part of persistent storage **308** for transfer onto a storage device, such as a hard drive, that is part of persistent storage **308**. Computer readable storage media **324** also may take the form of a persistent storage, such as a hard drive, a thumb drive, or a flash memory that is connected to data processing system **300**. In some instances, computer readable storage media **324** may not be removable from data processing system **300**.

Alternatively, program code **318** may be transferred to data processing system **300** using computer readable signal media **326**. Computer readable signal media **326** may be, for example, a propagated data signal containing program code **318**. For example, computer readable signal media **326** may be an electromagnetic signal, an optical signal, and/or any other suitable type of signal. These signals may be transmitted over communications links, such as wireless communications links, an optical fiber cable, a coaxial cable, a wire, and/or any other suitable type of communications link. In other words, the communications link and/or the connection may be physical or wireless in the illustrative examples.

In some advantageous embodiments, program code **318** may be downloaded over a network to persistent storage **308** from another device or data processing system through computer readable signal media **326** for use within data processing system **300**. For instance, program code stored in a computer readable storage media in a server data processing system may be downloaded over a network from the server to data processing system **300**. The data processing system providing program code **318** may be a server computer, a client computer, or some other device capable of storing and transmitting program code **318**.

The different components illustrated for data processing system **300** are not meant to provide architectural limitations to the manner in which different embodiments may be implemented. The different advantageous embodiments may be implemented in a data processing system including components in addition to or in place of those illustrated for data processing system **300**.

Other components shown in **Figure 3** can be varied from the illustrative examples shown. The different embodiments may be implemented using any hardware device or system capable of executing program code. As one example, data processing system **300** may include organic components integrated with inorganic components and/or may be comprised entirely of organic components excluding a human being. For example, a storage device may be comprised of an organic semiconductor.

As another example, a storage device in data processing system **300** is any hardware apparatus that may store data. Memory **306**, persistent storage **308**, and computer readable media **320** are examples of storage devices in a tangible form.

In another example, a bus system may be used to implement communications fabric **302** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **306** or a cache, such as found in an interface and memory controller hub that may be present in communications fabric **302**.

With reference now to **Figure 4**, an illustration of turbulence information is depicted in accordance with an advantageous embodiment. In this example, turbulence information **400** is one example of turbulence information **236** in **Figure 2**.

As depicted, turbulence information **400** includes pieces of data **402**, time stamps **404**, location information **406**, aircraft identifier **408**, and flight number **410**.

Pieces of data **402** are portions of the data generated by motion sensor system **210** in **Figure 2** that have been identified as indicating the presence of turbulence. Time stamps **404** may be associated with pieces of data **402** to indicate when pieces of data **402** were generated. Location information **406** identifies the locations of the aircraft when pieces of data **402** are generated.

Aircraft identifier **408** identifies the particular aircraft. This identifier may be some unique number, such as a tail number for the aircraft. Of course, any other type of identifier may be used. Flight number **410** identifies the flight of the aircraft.

Of course, the illustration of turbulence information **400** is only intended as one example of the type of information that may be generated. Turbulence information **400** is sent to a ground station, which may process turbulence information **400**. The processing of turbulence information **400** may involve the identification of other aircraft or platforms that should receive turbulence information **400**. In other words, turbulence information **400** may only be re-routed without any changes as part of the processing of turbulence information **400**. In other illustrative examples, turbulence information **400** may be modified, changed, or replaced during processing.

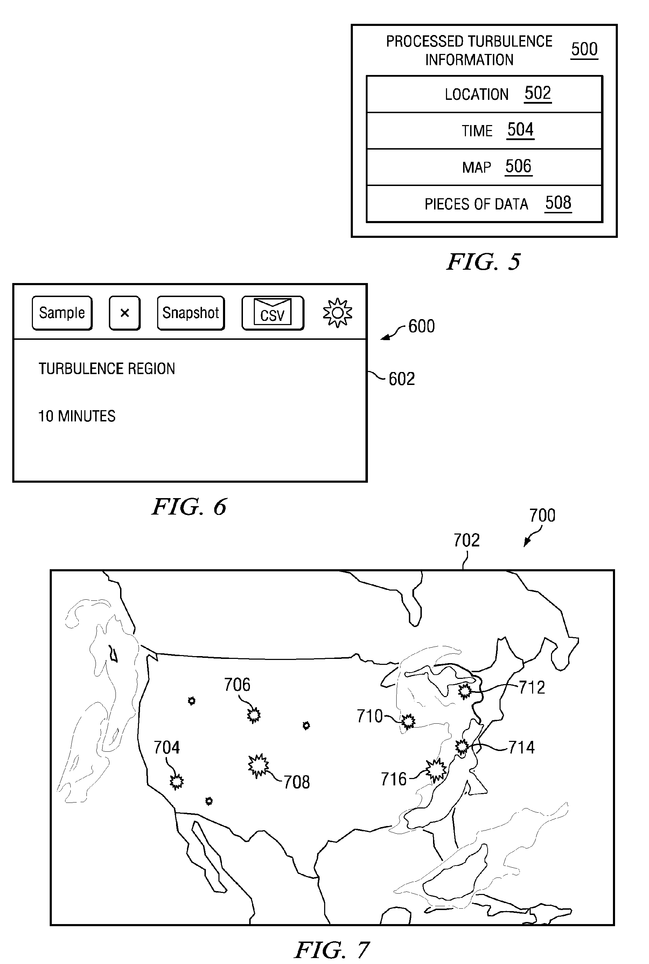

With reference now to **Figure 5**, an illustration of processed turbulence information is depicted in accordance with an advantageous embodiment. In this illustrative example, processed turbulence information **500** is an example of processed turbulence information **264** in **Figure 2**.

As depicted, processed turbulence information **500** includes location **502**, time **504**, map **506**, and pieces of data **508**. Location **502** identifies a location of the turbulence. This location may identify a region of airspace in which turbulence has been detected. Time **504** may indicate a period of time at which the aircraft receiving processed turbulence information **500** will encounter turbulence.

Map **506** includes a map with identifications of turbulence in different regions of the map. Pieces of data **508** include data identified as indicating turbulence. Pieces of data **508** are generated by the portable data processing system detecting the turbulence.

In these illustrative examples, processed turbulence information **500** may, in some examples, include only location **502** and time **504**. Processed turbulence information **500** may, in some cases, include map **506** and pieces of data **508** without location **502** and time **504**.

With reference now to **Figure 6**, an illustration of turbulence information is depicted in accordance with an advantageous embodiment. In this example, turbulence information **600** is presented on display **602**.

In this example, turbulence information **600** is an example of turbulence information **236** that may be generated using number of pieces of data **232** in **Figure 2**. In this example, turbulence information **600** is displayed on a remote data processing system, such as remote data processing system **260** in aircraft **262** in **Figure 2**. Turbulence information **600** indicates that a turbulence region will be reached by the aircraft in 10 minutes.

With reference now to **Figure 7**, another example of turbulence information is depicted in accordance with an advantageous embodiment. In these illustrative examples, processed turbulence information **700** is an example of processed turbulence information **264** in **Figure 2**. Processed turbulence information **700** may be generated by remote data processing system **260** in **Figure 2** in these depicted examples.

Processed turbulence information **700** is generated from receiving turbulence information from multiple portable data processing systems on different aircraft. In this example, processed turbulence information **700** indicates turbulence is present in regions **704**, **706**, **708**, **710**, **712**, **714**, and **716**. In this illustrative example, a user may select one of these regions to display additional turbulence information. An example of the information that may be displayed is depicted in the figure below.

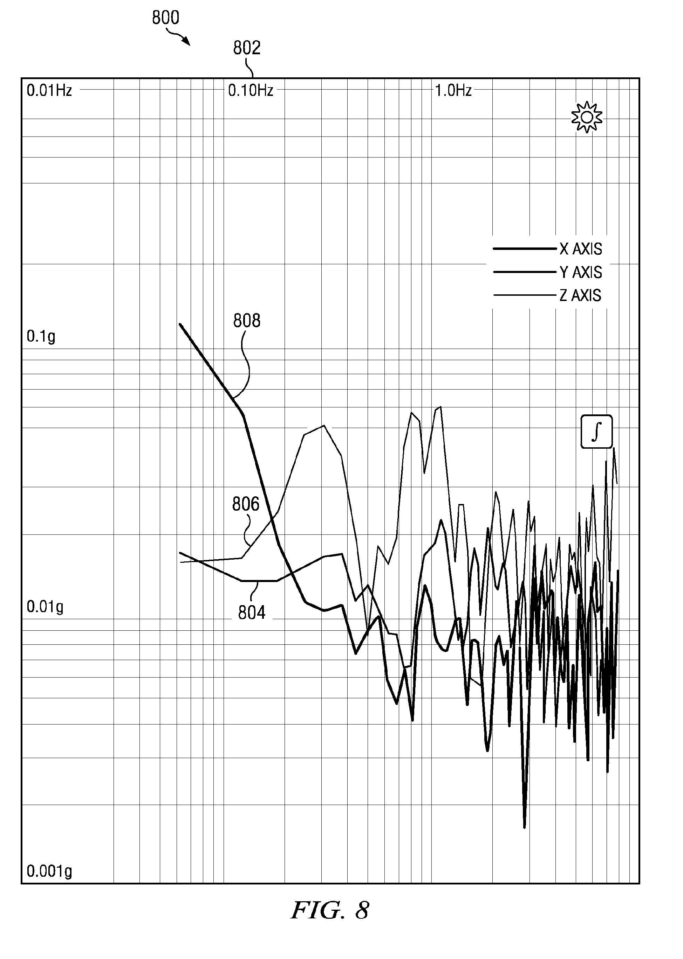

With reference now to **Figure 8**, an illustration of turbulence information is depicted in accordance with an advantageous embodiment. In this illustrative example, turbulence information **800** may be displayed on display **802** of a data processing system. The data processing system may be, for example, handheld data processing system **218** in **Figure 2**. Further, turbulence information **800** may be displayed when one of regions **704**, **706**, **708**, **710**, **712**, **714**, or **716** in **Figure 7** is selected.

In this illustrative example, turbulence information **800** is presented in the frequency domain. Turbulence information **800** is presented on three axes, as indicated by lines **804**, **806**, and **808**. Line **804** is the x-axis, line **806** is the y-axis, and line **808** is the z-axis in these examples. The y-axis represents force in Gs, while the x-axis represents the frequency for the turbulence that is detected by a portable data processing system. The z-axis is along the velocity vector of the aircraft. In other words, the z-axis is in the direction in which the aircraft moves.

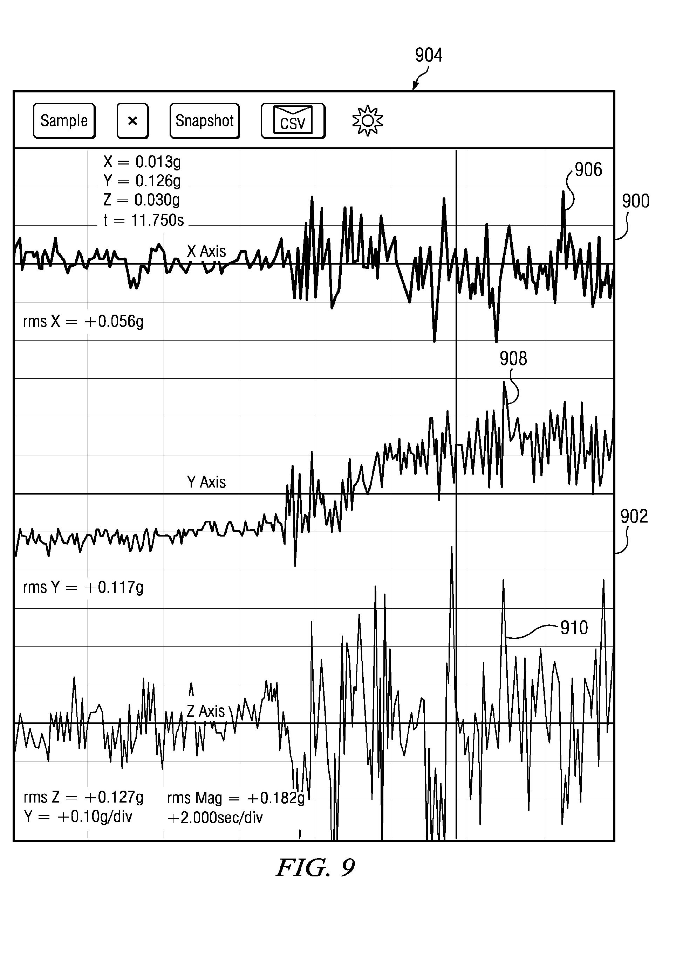

With reference now to **Figure 9**, an illustration of turbulence information displayed on a data processing system is depicted in accordance with an advantageous embodiment.

In this illustrative example, turbulence information **900** is presented in the time domain. Turbulence information **900** is presented on display **902** of a data processing system. Turbulence information **900** may be an example of turbulence information **236** or processed turbulence information **264** in **Figure 2**. In this illustrative example, display **902** may be a display generated by handheld data processing system **218** or remote data processing system **260** in **Figure 2**.

In this illustrative example, turbulence information **900** includes pieces of data **904**. Pieces of data **904** are illustrated in lines **906**, **908**, and **910**. The x-axis represents time, while the y-axis represents magnitude. In this illustrative example, lines **906**, **908**, and **910** are separated into different axes. Line **906** indicates force on the x-axis, line **908** indicates force on the y-axis, while line **910** indicates force on the z-axis.

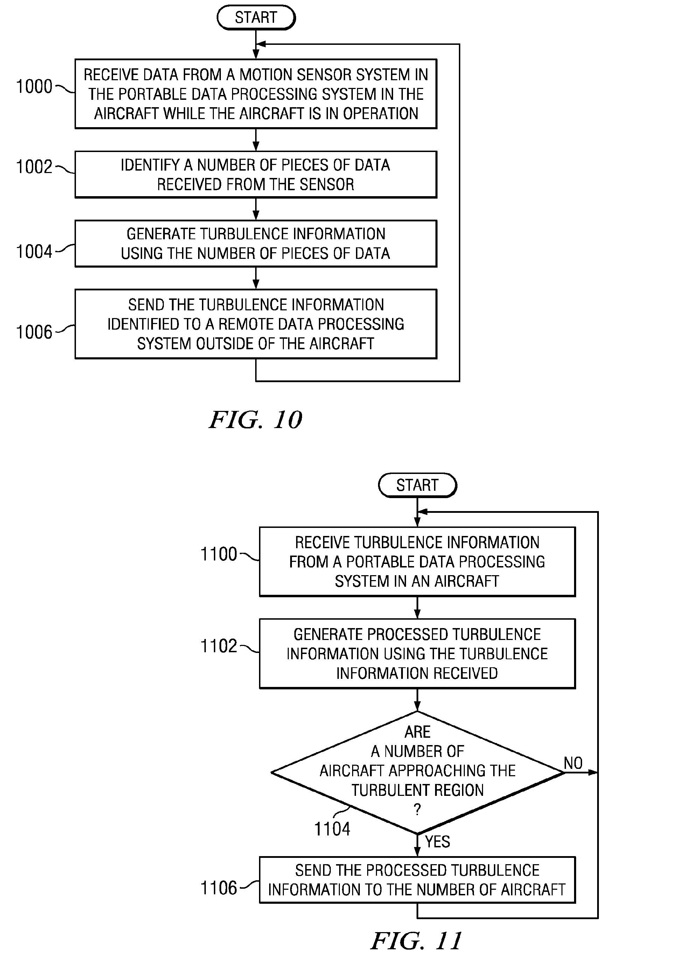

With reference now to **Figure 10**, an illustration of a flowchart of a process for monitoring air turbulence is depicted in accordance with an advantageous embodiment. The process illustrated in **Figure 10** may be implemented in turbulence monitoring environment **100** in **Figure 1** and/or turbulence monitoring environment **200** in **Figure 2**. In particular, the process may be implemented using portable data processing system **204** in aircraft **202** in **Figure 2**.

The process begins by receiving data from a motion sensor system in the portable data processing system in the aircraft while the aircraft is in operation (operation **1000**). In operation **1000**, the portable data processing system is configured to be moved by a single person. For example, the portable data processing system may be handheld data processing system **218** in **Figure 2**.

In these illustrative examples, the motion sensor system is comprised of a number of sensors that generate the data. The number of sensors may include, for example, without limitation, an accelerometer, a piezoresistor sensor, a strain gauge, and/or other suitable types of sensors.

The process then identifies a number of pieces of data in the data received from the sensor (operation **1002**). The number of pieces indicates a presence of the turbulence encountered by the aircraft.

Thereafter, the process generates turbulence information using the number of pieces of data (operation **1004**). The turbulence information may include the number of pieces of data, location information for the aircraft, time stamps, an aircraft identifier, and/or other suitable information. The time stamps indicate the time at which the number of pieces of data was generated.

The process then sends the turbulence information identified to a remote data processing system outside of the aircraft (operation **1006**), with the process then returning to operation **1000** as described above. The remote data processing system may be located in an aircraft, a ground station, a transmitter and receiver station, or some other suitable location.

With reference now to **Figure 11**, an illustration of a flowchart of a process for processing turbulence information is depicted in accordance with an advantageous embodiment. The process illustrated in **Figure 11** may be implemented in turbulence monitoring environment **100** in **Figure 1** and/or turbulence monitoring environment **200** in **Figure 2**. In particular, the process may be implemented at ground station **118** in **Figure 1**. Further, the process may be implemented using remote data processing system **256** in aircraft **202** in **Figure 2**.

The process receives turbulence information from a portable data processing system in an aircraft (operation **1100**). The portable data processing system may be, for example, portable data processing system **204** in **Figure 2**. The process then generates processed turbulence information using the turbulence information received (operation **1102**). The processed turbulence information may take the form of, for example, without limitation, processed turbulence information **500** in **Figure 5**, processed turbulence information **600** in **Figure 6**, and/or processed turbulence information **700** in **Figure 7**.

In this illustrative example, the processed turbulence information may include a map identifying the location of the turbulent region and a magnitude of the turbulence in the turbulent region. Further, the processed turbulence information may include an indication of a period of time for which the turbulence may be present.

The process determines whether a number of aircraft are approaching the turbulent region (operation **1104**). An aircraft may be approaching a turbulent region if the aircraft is entering the turbulent region or heading towards the turbulent region.

If a number of aircraft are approaching the turbulent region, the process then sends the processed turbulence information to the number of aircraft (operation **1106**). In this manner, the number of aircraft may have the most current turbulence information for the turbulent region prior to reaching the turbulent region. The process then returns to operation **1100** as described above.

With reference again to operation **1104**, if a number of aircraft are not approaching the turbulent region, the process then returns to operation **1100** as described above.

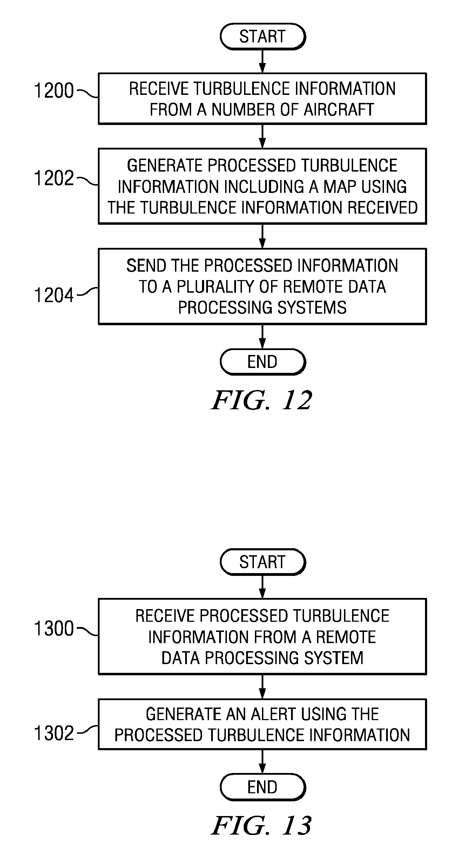

With reference now to **Figure 12**, an illustration of a flowchart of a process for processing turbulence information is depicted in accordance with an advantageous embodiment. The process illustrated in **Figure 12** may be implemented in turbulence monitoring environment **100** in **Figure 1** and/or turbulence monitoring environment **200** in **Figure 2**. In particular, the process may be implemented at ground station **118** in **Figure 1**. Further, the process may be implemented using remote data processing system **256** in aircraft **202** in **Figure 2**.

The process begins by receiving turbulence information from a number of aircraft (operation **1200**). The turbulence information received may be for a number of turbulent regions. Thereafter, the process generates processed turbulence information including a map using the turbulence information received (operation **1202**). The processed turbulence information including the map may take the form of, for example, a report.

In operation **1202**, the processed turbulence information includes the map and an identification of the turbulent regions on the map. The processed turbulence information may include other information, such as, for example, an identification of the magnitude of the turbulence in the turbulent region, an identification of how long the turbulence may be encountered in a particular turbulent region, and/or other suitable information.

Thereafter, the process sends the processed information to a plurality of remote data processing systems (operation **1204**), with the process terminating thereafter. The plurality of remote data processing systems may be associated with platforms including, for example, the number of aircraft, other aircraft, a number of air traffic control towers, and/or other platforms.

With reference now to **Figure 13**, an illustration of a flowchart of a process for generating a turbulence alert is depicted in accordance with an advantageous embodiment. The process illustrated in **Figure 13** may be implemented in turbulence monitoring environment **100** in **Figure 1** and/or turbulence monitoring environment **200** in **Figure 2**. In particular, the process may be implemented using handheld data processing system **122** in **Figure 1** and/or remote data processing system **260** in **Figure 2**.

The process begins by receiving processed turbulence information from a remote data processing system (operation **1300**). The remote data processing system may be, for example, ground station **118** in **Figure 1** and/or remote data processing system **256** in platform **258** in **Figure 2**. The processed turbulence information may take the form of, for example, processed turbulence information **600** in **Figure 6** in this illustrative example.

Thereafter, the process generates an alert using the processed turbulence information (operation **1302**), with the process terminating thereafter. In operation **1302**, the alert may indicate to the operator of the aircraft that the aircraft may encounter turbulence during the flight.

The flowcharts and block diagrams in the different depicted embodiments illustrate the architecture, functionality, and operation of some possible implementations of apparatus and methods in different advantageous embodiments. In this regard, each block in the flowcharts or block diagrams may represent a module, segment, function, and/or a portion of an operation or step.

In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

The description of the different advantageous embodiments has been presented for purposes of illustration and description and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus comprising:
a portable data processing system comprising a portable housing configured to be moved by a single person; a processor unit associated with the portable housing; a motion sensor system associated with the portable housing, wherein the motion sensor system is configured to generate data about movement detected for the portable data processing system; a wireless communications unit associated with the portable data processing system; and a storage device; and
program code stored on the storage device, wherein the processor unit is configured to run the program code to receive the data from the motion sensor system, identify a number of pieces of data in the data received from the motion sensor system in which the number of pieces of data indicates a presence of turbulence encountered by an aircraft in which the portable data processing system is located, generate turbulence information using the number of pieces of data, and send the turbulence information identified to a remote data processing system outside of the aircraft.

2. The apparatus of claim 1 further comprising:
a wireless network in the aircraft, wherein the wireless network is configured to receive the turbulence information from the portable data processing system and send the turbulence information to the remote data processing system.

3. The apparatus of claim 2, wherein the wireless network comprises:
a router configured to receive the turbulence information from the portable data processing system and send the turbulence information to the remote data processing system.

4. The apparatus of claim 1, wherein the processor unit is configured to run the program code to include at least one of location information about the aircraft and time stamps in the turbulence information sent to the remote data processing system.

5. The apparatus of claim 4, wherein the processor unit is configured to receive the location information from a global positioning system unit.

6. The apparatus of claim 1, wherein in generating the turbulence information, the processor unit is configured to run the program code to determine whether a piece of data in the data generated by the motion sensor system exceeds a threshold and identify the piece of data as a piece of turbulence information in the turbulence information.

7. The apparatus of claim 1, wherein the remote data processing system is located in a second aircraft and the turbulence information comprises a time for which the turbulence is expected to be encountered by the second aircraft.

8. The apparatus of claim 1, wherein the remote data processing system is configured to receive the turbulence information from the portable data processing system and additional turbulence information from a number of other portable data processing systems in additional aircraft and generate a report using the turbulence information and the additional turbulence information.

9. The apparatus of claim 1, wherein the processor unit is further configured to run the program code to identify additional data during landing of the aircraft in which the additional data indicates the landing in which motion of the aircraft is greater than a threshold and send the additional data to the remote data processing system.

10. The apparatus of claim 1, wherein the turbulence information comprises at least one of the number of pieces of data, a value indicating a level of turbulence on a scale, a warning of when the turbulence is expected, an aircraft identifier, and a flight number.

11. A method for monitoring for turbulence, the method comprising:
receiving data from a motion sensor system in a portable data processing system in an aircraft while the aircraft is in operation, wherein the portable data processing system is configured to be moved by a single person;
identifying a number of pieces of data in the data received from the motion sensor system in which the number of pieces of data indicates a presence of the turbulence encountered;
generating turbulence information using the number of pieces of data; and
sending the turbulence information identified to a remote data processing system outside of the aircraft.

12. The method of claim 11, wherein the generating step comprises:
selecting the number of pieces of data from the data, wherein the number of pieces of data exceed a threshold and wherein each piece of data in the data exceeding the threshold is a piece of turbulence information in the turbulence information generated.

13. The method of claim 11 further comprising:
processing the turbulence information at the remote data processing system to generate processed turbulence information; and
sending the processed turbulence information to a number of other aircraft.

14. The method of claim 11 further comprising:
receiving additional turbulence information from a number of other portable data processing systems at the remote data processing system;
generating, by the remote data processing system, a report using the turbulence information and the additional turbulence information.

15. The method of claim 11, wherein the sending step comprises:
sending the turbulence information to a wireless network in the aircraft; and
sending, by the wireless network, the turbulence information to the remote data processing system outside of the aircraft.

16. The method of claim 11, wherein the turbulence information comprises at least one of the number of pieces of data, a value indicating a level of turbulence on a scale, a warning of when the turbulence is expected, an aircraft identifier, and a flight number.
